# EUROPÄISCHE PATENTANMELDUNG

(11) **EP 2 527 761 A2**
(43) Veröffentlichungstag der Anmeldung: **28.11.2012**
(21) Anmeldenummer: 12004061.3
(22) Anmeldetag: 24.05.2012
(51) Int. Cl.: F24J 2/42, F28D 15/02

(54) **Vorrichtung zur Wärmeübertragung**

(30) Priorität: 24.05.2011 DE 102011076421
(71) Anmelder: NARVA Lichtquellen GmbH & Co. KG, 09618 Brand-Erbisdorf (DE)
(72) Erfinder: Mientkewitz, Gerhard, 09599 Freiberg (DE); Zabel, Jürgen, 09599 Freiberg (DE)
(74) Vertreter: Castell, Klaus

(57) **Zusammenfassung**

Die Erfindung betrifft eine Wärmeübertragungsvorrichtung für das Übertragen von Wärmenergie eines Wärmerohrkondensators in ein Arbeitsfluid, wobei die Wärmeenergie über ein Wärmerohr (Heatpipe) durch Verdampfung eines geeigneten Fluids im Bereich des Verdampferteils des Wärmerohres, aufgenommen und anschließend bei der Kondensation des Dampfes dieses Fluids im Kondensator wieder abgegeben wird, wobei der Kondensator im Sammler direkt vom Arbeitstluid umspült wird.

Erfindungsgemäß wird vorgeschlagen, dass der Sammler (6), in dem das Arbeitsfluid (5) strömt, nicht oder nur in einem geringem Maße zur Wärmeübertragung der Wärme in das Arbeitstluid beiträgt, sondern ausschließlich bzw. vorzugsweise die Oberfläche des Kondensators (4) die gesamte Wärme in das Arbeitstluid (5) überträgt.

Dies hat den Vorteil, dass bei dem der Einsatz von Wärme gut leitendem Material für den das Arbeitstluid führenden Kanal, hier den Sammler, nicht erforderlich ist.

## Beschreibung

Die Erfindung betrifft eine Vorrichtung zur Wärmeübertragung, vorzugsweise für einen Kollektor zur Sammlung solarer Energie, der aus Absorberelementen (1) besteht, bei dem der Transport der von mindest durch ein Absorberelement (1) gesammelten solaren Energie mittels eines oder mehrere Wärmerohre (Heatpipes) (2) durch Verdampfen eines entsprechenden Verdampfungsfluids im Verdampfungsbereich der Wärmerohre (3) und der nachfolgenden Kondensation des Fluiddampfes im Kondensator (4) erfolgt und die bei der Kondensation freigesetzte Verdampfungswärme anschließend in ein Arbeitsfluid (5) übertragen wird, dass im sogenannten Sammler (6) fließt.

Die Kondensatoren (4) stecken quer zur Strömungsrichtung des Fluides (5) im Sammler (6) und besitzen entsprechende Vorrichtungen zum fluiddichten Einbringen und Fixieren (8)

Die vom Kondensator in ein geeignetes Arbeitsfluid (5) übertragene Energie, vorzugsweise ein Wasser-Frostschutzmittel-Gemisch, führt die Wärme einer Nutzung zu, wobei die Wärme insbesondere für Heizungen, Bereitstellen von Warmwasser, für technologische Anwendungen wie Trocknungsprozesse, Lebensmittelherstellung oder auch Kühlprozesse genutzt wird. Das Kondensat, das sich bei der Wärmeübertragung an der Kondensator-Innenoberfläche bildet, fließt anschließend durch Schwerkraft oder mittels einer Kapillarstruktur wieder vom Kondensator über den Verbindungskanal zurück in den Verdampferteil und steht damit für ein erneutes Verdampfen zur Verfügung.

Technisch problematisch bei der Gestaltung einer Wärmeübertragung mit einem Wärmerohr ist, dass die einzelnen Wärmeübertragungen, wie das Einbringung der Wärme in den Verdampferteil, die Wärmeübertragung in das Verdampferfluid, die Strömung des Dampfes in den Kondensator, der Kondensationsprozess, das Durchdringen der Kondensatorwände und das Übertragen der Wärme von den Kondensatorwänden in das Arbeitsfluid nicht verlustfrei ablaufen. Es treten thermische Widerstände auf, die Temperaturabfälle und damit energetische Verluste bewirken. Diese sind insbesondere abhängig von der Art des Fluides, der Größe und spezifische Gestaltung der inneren Oberfläche des Kondensators, an denen die Kondensation erfolgt, den Übertragungswiderständen der zu durchdringenden Wände des Kondensators, dem thermischen Übergangswiderstand des Spaltes zwischen Kondensator und der Kontaktfläche des Kondensators mit dem Sammler und dem Übergangswiderstand der Wärmeübertragung zwischen Sammler und Arbeitsfluid.

So bildet sich beispielsweise im Kondensator ein Film des Verdampferfluids aus, dessen Stärke von der Neigung des Kondensators, der Wechselwirkung der Oberflächenspannung des Kondensator-Wandmaterials mit dem kondensierenden VerdampferFluid und dessen Eigenschaften, wie Viskosität oder Dichte abhängt. Die Wärmeleitfähigkeit und die Viskosität des Verdampferfluids bestimmen die Höhe des Temperaturabfalls, da der Wärmestrom den Fluid-Film durchdringen muss und dabei einen Wärmeverlust bewirkend Temperaturabfall erzeugt.

Die Kondensation und sich dabei ausbildende Fluidkeile wurde von Nußelt beschrieben (siehe auch Baehr; Stephan: "Wärme und Stoffübertragung", Springerverlag 2008, S 480 ff.). Kritisch sind in diesem Zusammenhang vor allem die Wärmeübertragungen des Verdampfungsfluids zur Kondensatorwand und von der Kondensatoraußenoberfläche zum Arbeitsfluid, da die Übertragungstlächen relativ klein sind.

In Literatur und Praxis gibt es eine Reihe unterschiedlicher Sammler, die spezifische Vor und Nachteile besitzen.

Bekannt ist DE 3301 526 A1 in dem eine wärmeleitende Verbindung zwischen dem Kondensator und einer in den Sammler ragenden wärmetechnisch leitend eingefügten Übertragungshülse, die den Kondensator aufnimmt, wobei zur Verbesserung des Wärmkontaktes und Vermeidung eines Übertragungsspaltes zwischen Kondensator und Hülse ein Lot eingebracht wird.

Nachteilig bei dieser Lösung ist, dass ein Wechseln defekter Vakuumrohre nicht möglich ist und dass die gesamte Konstruktion für eine gute Wärmeübertragung aus wärmetechnisch gut leitendem Material hergestellt sein muss.

Das DE 102 50 744 A1 schützt einen Sammler mit wärmetechnisch gut leitender Kondensator-Aufnahmehülse, bei dem zur Verbesserung der Wärmeübertragung ein Blattfederelement den Kondensator nach oben, dem Bereich der stärksten Wärmeübertragung, gegen die Hülse drückt.

Nachteilig ist die große Menge des erforderlichen Materials guter Wärmeleitfähigkeit.

Das DE 202 16 789 U1 beschreibt einen Solarkollektor mit einem Sammlerrohr, bei dem das Sammlerrohr den Arbeitstluidstrom so teilt, dass mindestens 50- 100% des Volumenstromes des Arbeitsfluides durch den oberen Kanal des den Kondensator umschließenden Mantels geführt werden.

Als Nachteil dieser Lösung ist anzusehen, dass durch die Teilung des Arbeitsfluidstromes eine materialintensive, aufwendige Ausführung des Sammlers aus Material hoher Wärmeleitfähigkeit entsteht.

Bekannt ist des Weiteren eine Sammlergestaltung für den Heat Pipe Solar Collector HP200 gemäß einer Prospekt-Veröffentlichung der Kingspan Gruppe. Bei diesem Sammler stecken die Kondensatoren in zylindrischen Hülsen, die ihrerseits quer in ein Rohr gefügt sind, so dass die Hülsen von dem Fluidstrom des Sekundärkreises umspült werden.

Mit dieser konstruktiven Ausführung verbindet sich der Nachteil, dass der Wärmekontakt auf wegen auftretender Durchmessertoleranzen, schwankendem Füllungsgrad des Restspaltes mit Wärmeleitpaste und fehlendem Anpressdruck sehr stark schwankt und dadurch erhebliche Wirkungsgradtoleranzen auf Grund entstehender Temperaturabfälle bewirkt werden. Darüber hinaus ist der Einsatz von Material guter Wärmeleitfähigkeit (Kupfer) erforderlich.

Eine Sammlergestaltung der Firma Viessmann sieht für den Vitosol 300 Hochleistungs-Vakuum-Röhrenkollektor "Duotec" vor, die Wärme der Kondensatoren über einen hochwirksamen Doppelrohrsammler, dessen Hälften mit über jedem Kondensator zugeordnete Federn auf den Kondensator gepresst werden, zu übertragen.

Diese Konstruktion erweist sich durch die Doppelrohrausführung als eine aufwendige technische Lösung mit hohem Materialanteil. Außerdem bewirkt diese technische Lösung letztlich nur linienförmige Kontakte zur Wärmeübertragung.

Im Gebrauchsmuster 20 2007 015 968.4 wird eine Vorrichtung zur Wärmeübertragung geschützt, die ausdrücklich die Einbeziehung des Sammlerrohres in die Wärmeübertragung beschreibt. Der Kondensator befindet sich in einer mit dem Sammler wärmetechnisch gut leitenden Verbindung.

Nachteilig bei einer solchen Konstruktion ist, dass der gesamte Sammler einschließlich Aufnahmehülse für eine Funktion aus wärmetechnisch gut leitendem Material (Kupfer) hergestellt werden muss.

Allen bekannten Lösungen ist gemeinsam, dass die Wärme nicht nur vom Kondensator in das Arbeitsfluid übertragen wird, sondern dass der Sammler wesentlich zur Wärmeübertragung dient. Eine solche Ausführung hat den Nachteil, dass große Materialmengen aus gut leitenden Materialien, hauptsächlich Kupfer für deren Herstellung erforderlich sind.

Der Erfindung liegt daher die Aufgabe zu Grunde, eine technisch-ökonomisch realisierbare Kondensator-Sammler-Ausführung bereitzustellen, bei dem die Anwendung von die Wärme gut leitendem Material für den das Arbeitsfluid führenden Kanal, den Sammler, nicht erforderlich ist.

Erfindungsgemäß wird die Aufgabe zur Übertragung der Wärmeenergie aus Kondensatoren von Wärmerohren (Heatpipes), auf ein Arbeitsfluid durch eine Anordnung gelöst, wobei der Kondensator direkt vom Arbeitsfluid umspült wird und die Kondensator-Oberfläche so gestaltet ist, dass auch ohne die übliche zusätzliche Wärmeübertragung über das Sammlerrohr der Temperaturabfalle so gering ist, dass eine Wärmeübertragung mit gutem Wirkungsgrad eintritt.

Eine besonders bevorzugte Ausführungsform der Anordnung sieht vor, dass der Sammler aus Material hergestellt ist, dass einen relativ niedrigen Wärmeleitungskoeffizienten aufweisen. Bevorzugt werden die Materialien: Stahl, Edelstahl, Kunststoff, Glas, Beton.

Zur Erreichung niedriger Temperaturabfälle, um eine weitgehend verlustfreie Übertragung der Wärme zwischen Kondensator und Arbeitsfluid zu ermöglichen, wird die wärmeübertragende Außenoberfläche des Kondensators so strukturiert, dass einerseits eine größere Kontaktoberfläche entsteht aber andererseits die Belange der Strömungsform, die ja die Wärmeübertragung wesentlich beeintlusst, berücksichtigt werden. Darüber hinaus ist der Druckabfall zu beachten. Man wählt die Strukturierung in Verbindung mit dem Massenstrom des Arbeitsfluides so, dass man am Beginn einer turbulenten Strömung arbeitet.

Eine weitere Möglichkeit ist, dass der Kondensator auch eine seine Innenobertläche vergrößernde Struktur aufweist. Sie sollte so gestaltet sein, dass sie wärmetechnisch gut leitend mit der die Wärme an den Verbraucher weiterleitenden Außenoberfläche des Kondensators verbunden ist und den Abfluss des kondensierten Verdampfungsfluids von den inneren Oberflächen des Kondensators nicht behindert.

Vorteilhaft ist deshalb eine inneren Oberfläche vergrößernde Struktur analog einer Kühlrippen-Struktur, die weitgehend in Abflussrichtung des Fluides verläuft.

Ist sowohl eine Außenstruktur wie auch eine Innenstruktur vorgesehen und vorteilhaft, ist es günstig, wenn Innen- und Außenstruktur sich spiegelbildlich verhalten. Dort wo eine Auswölbung der Außenoberfläche der Kondensator-Mantelfläche existiert, befindet sich auf der Innenobertläche des Kondensator-Mantels eine weitgehend formgleiche Einwölbung.

Als Beispiel sei eine eingeprägte wellblechartige Verformung des Mantels in Längsachse des Kondensators, die sowohl außen und innen ausgeformt ist, genannt.

Mit der Erfindung verbindet sich der erstrebte Vorzug, dass hohe Temperaturabfälle bei der Kondensation des Verdampfertluides und auch bei der Übertragung der Wärme vom Kondensator in das Arbeitsfluid des Sekundärkreises, die Wirkungsgradminderungen am Kollektor bewirken, sowie eine materialintensive Gestaltung der Sammlervorrichtung durch die geometrische Neugestaltung des Kondensators und der Sammlervorrichtung vermieden werden.

Es hat sich gezeigt, dass die verfügbaren Kondensationsobertlächen im Kondensator speziell bei Einsatz organischer Verdampfertluide bei der Geometrie der branchenüblichen zylindrischen Kondensatoren häufig nicht ausreichend groß genug sind und dadurch erhebliche Temperaturabfälle auftreten können. Dies ist unter anderem bedingt durch die schlechtere Wärmeleitfähigkeit organischer Verdampfungstluide im Verhältnis zu Wasser.

Im Folgenden soll die Erfindung an Hand von Beispielen und Zeichnungen näher erläutert werden.

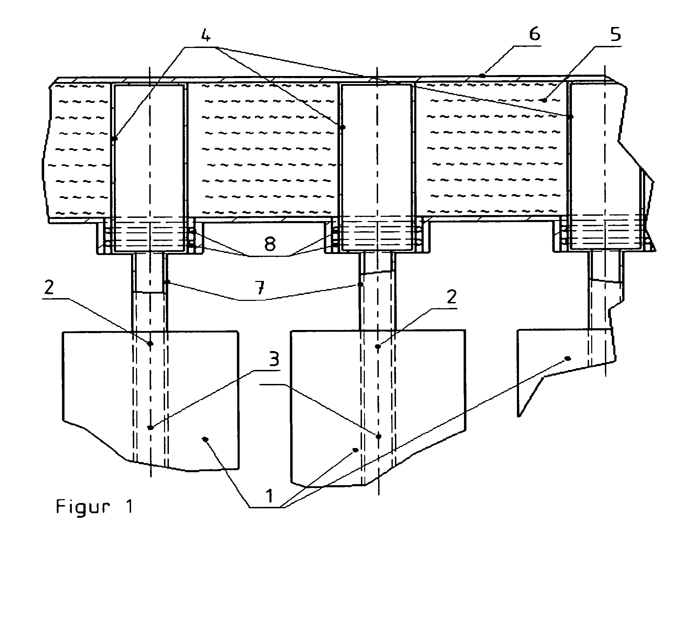

**Figur. 1** zeigt einen Solarkollektor mit den Kollektorelementen (1) und dem Verdampfungsbereich des Wärmerohrs (3) das in seinem unteren Teil das Verdampfertluid aufnimmt und über den Verbindungskanal (7) mit dem Kondensator (4) verbunden ist. Mit der auf den Oberflächen der einzelnen Absorberelementen (1) absorbierten solaren Energie wird das Verdampferfluid verdampft, strömt über den Verbindungskanal (7) zu dem Kondensator (4) des Wärmerohres, kondensiert dort und überträgt dabei die während des Verdampfungsprozesses aufgenommene Verdampfungswärme an das Gehäuse des erfindungsgemäßen Kondensators (4).

Von der ausreichend großen Außenoberfläche des Kondensators (4) wird die Wärme auf das Arbeitsfluid 5, beispielsweise in ein Wasser-Glykol-Gemisch übertragen.

Das Kondensat, das sich bei der Übertragung der Wärme an die Innenobertläche des Kondensators (4) bildet wird, durch die wirkende Schwerkraft der 45° geneigten Kollektoren mit Wärmerohr (2) wieder über den Verbindungskanal (7) in den Verdampferbereich der Wärmrohre zurückgeführt und steht dann für ein erneutes Verdampfen wieder zur Verfügung.

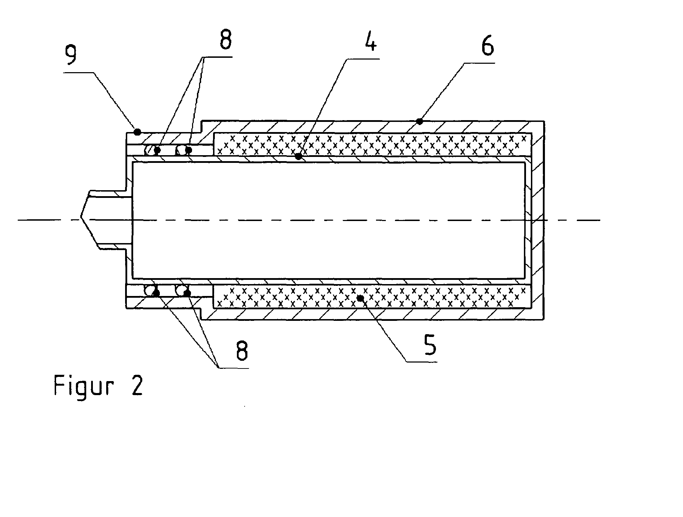

**Figur 2** zeigt einen Querschnitt des Sammlers. Dabei sind das Sammlerrohr (6), die Einsteckhülse (9), der Kondensator (4), die Dichtungen (8), der Verbindungskanal (7).

Der Solarkollektor gemäß Ausführungsbeispiel mit den direkt vom Arbeitsfluid umspülten Kondensatoren (4) besitzt folgende Parameter:

| | | |
|---|---|---|
| Sammler-Ausführung | Stahl Rechteckprofil 55 mm x 34 mm, Wandstärke 2,5 mm, Rohrstutzen zur Kondensatoraufnahme | |
| Vakuumrohr mit Wärmerohr | | |
| Absorberelement | Fläche: | 955,5 cm^2 |
| | Aperturefläche: | 1030 cm^2 |
| | Absorptionskoeffizient: | 0,95 |
| | Emissionskoeffizient: | 0,05 |
| Hüllrohr | Transmission: | 0,954 |
| Kondensator-Ausführung | Länge: 50 mm, Durchmesser: | 22 mm |
| | Oberflächenprofilierung, gewindeähnlich, Schneidwinkel 90°, Tiefe 0,3 mm, 0,6 mm, Mantelfläche 45 cm^2 | |
| | Material: | Kupfer |
| Verdampferfluid | n-Pentan, 7 ml | |
| | Leitwert Verdampfer-Kondensator: | 4 W/K |
| Arbeitsfluid | Wasser, 400 l/h | |
| | Leitwert Kondensator-Arbeitsfluid: | 5 W/K |
| Solare Leistung | 1000 W/m^2 | |
| Ergebnisse | | |
| Eta, Aperture bezogen | 0,779 | |
| Wärmeleistung eines Vakuumrohres | 80,2 W | |

Nach Montage der Kondensatoren (4) ist der Sammler über entsprechende Rundringe abgedichtet, so dass kein Arbeitsfluid austreten kann.

Der gesamte Temperaturabfall von der Absorberfläche über Kondensation und Wärme-Übertragung in das Arbeitsfluid 5 beträgt 36 K.

## Patentansprüche

1. Wärmeübertragungsvorrichtung für das Übertragen von Wärmenergie eines Wärmerohrkondensators in ein Arbeitsfluid, wobei die Wärmeenergie über ein Wärmerohr (Heatpipe) durch Verdampfung eines geeigneten Fluids im Bereich des Verdampferteils des Wärmerohres, aufgenommen und anschließend bei der Kondensation des Dampfes dieses Fluids im Kondensator wieder abgegeben wird, wobei der Kondensator im Sammler direkt vom Arbeitsfluid umspült wird, ***dadurch gekennzeichnet, dass*** der Sammler (6), in dem das Arbeitsfluid (5) strömt, nicht oder nur in einem geringem Maße zur Wärmeübertragung der Wärme in das Arbeitsfluid beiträgt, sondern ausschließlich bzw. vorzugsweise die Oberfläche des Kondensators (4) die gesamte Wärme in das Arbeitsfluid (5) überträgt.

2. Wärmeübertragungsvorrichtung nach Anspruch 1, ***dadurch gekennzeichnet, dass*** der Sammler, aus einem die Wärme schlecht bzw. relativ schlecht leitenden Material gefertigt ist.

3. Wärmeübertragungsvorrichtung nach Ansprüchen 1 und 2, ***dadurch gekennzeichnet, dass*** der Sammler aus einem Kunststoff, Beton, Stahl, Edelstahl, Glas gefertigt ist.

4. Wärmeübertragungsvorrichtung nach Ansprüchen 1 bis 3, ***dadurch gekennzeichnet, dass*** der Kondensator eine Profilierung an seiner umspülten Außenoberfläche besitzt, die längs, quer oder gleichzeitig sowohl längs als auch quer und auch in einem Winkel zur Strömungsrichtung des Arbeitstluids angeordnet ist, die eine Obertlächenvergrößerung bewirkt.

5. Wärmeübertragungsvorrichtung nach Ansprüchen 1 bis 4 ***dadurch gekennzeichnet, dass*** die Abwicklung der Profilierung der umspülten Außenoberfläche des Kondensators eine wellblechähnliche Form ergibt.

6. Wärmeübertragungsvorrichtung nach Ansprüchen 1 bis 5, ***dadurch gekennzeichnet, dass*** die umspülte Außenoberfläche des Kondensators radial überstehende Rippen besitzt.

7. Wärmeübertragungsvorrichtung eines Solarkollektors nach Anspruch 6, ***dadurch gekennzeichnet, dass*** die Profilierung trapezförmig und gegebenenfalls an den Kanten und Übergängen gerundet ausgebildet ist.

8. Wärmeübertragungseinrichtung nach Ansprüchen 1 bis 7, ***dadurch gekennzeichnet, dass*** die Wandstärke des Kondensators so gewählt ist, dass die Innenkontur und die Außenkontur einander entsprechen, so dass mit der Außenobertlächenvergrößerung auch eine Innenoberflächenvergrößerung eintritt.

9. Wärmeübertragungseinrichtung nach Ansprüchen 1 bis 8, ***dadurch gekennzeichnet, dass*** der Kondensator getrennte Bereiche für die Kondensation und Dichtung aufweist, die miteinander verbunden sind und der Kondensator aus einem Stück besteht
